# EUROPEAN PATENT SPECIFICATION

(11) **EP 2 031 251 B1**
(45) Date of publication and mention of the grant of the patent: **09.11.2011**
(21) Application number: 08252900.9
(22) Date of filing: 01.09.2008
(51) Int. Cl.: F04D 13/02

(54) **Multi-ribbed keyless coupling**
Mehrfach gerippte Kupplung mit Anti-Rotations-Elementen
Couplage à cannelures avec des élements antirotation

(30) Priority: 30.08.2007 US 897506
(43) Date of publication of application: 04.03.2009
(73) Proprietor: Sundyne Corporation, Arvada, CO 80007 (US)
(72) Inventor: Edwards, Stanley W., Arvada, CO 80004 (US); Wait, Scott R., Littleton, CO 80123 (US)
(74) Representative: Tomlinson, Kerry John

(56) References cited:
- EP-A2- 1 630 436
- WO-A1-2006/084268
- DE-A1- 3 344 533
- GB-A- 1 036 181
- GB-A- 2 225 834
- US-A- 4 790 683

## Description

### BACKGROUND

The present invention is directed to shaft couplings and, in particular, to couplings for use in magnetic-drive pumps. Magnetic-drive pumps comprise a dry portion which is connected to a power supply, and a wet portion, which is connected with a source of working matter. The wet portion is separately encased within a sealed shell that isolates the wet portion from the dry portion such that the need for sealing the dry portion is avoided and the wet portion can be placed in direct contact with the working matter. The dry portion typically comprises an electric drive motor that rotates a magnetic outer drive, while the wet portion typically comprises a centrifugal impeller that is connected to a magnetic inner drive. The inner drive is concentrically disposed within the outer drive such that the inner drive is magnetically coupled to the outer drive through the sealed shell of the wet portion. Thus, as the outer drive is driven by the electric motor, the inner drive rotates to turn the impeller to pump the working matter. Thus, the wet portion, including the inner drive, is directly exposed to the working matter. Furthermore, the working matter is used as a lubrication to facilitate rotation of the impeller on a non-rotating shaft in conjunction with a sleeve-type bushing. In order to reduce the need for sealing the wet portion and to permit the use of the pump with corrosive materials, the operative components of the wet portion, including the impeller, the non-rotating shaft and the sleeve-type bushing, are encased in or comprised of corrosion resistant materials such as polymers or resins.

An exemplary prior art magnetically driven centrifugal pump, which contains all the features of the preamble of claim 1, is described in WO 2006/084268.

In typical inner drive assemblies, the shaft is rigidly mounted to a wet portion housing such that it does not rotate, and the bushing is fitted over the shaft such that it is permitted to rotate. The bushing is then rigidly connected to the inner drive and the impeller such that as the inner drive is rotated by the outer drive, the impeller is driven to pump the working fluid. Typically, the bushing is connected to the inner drive through a force fit or a keyed connection. However, keyed connections require that the bushing and the inner drive be properly aligned in the axial and radial directions before assembly. Furthermore, keyed connections require tight tolerances to reduce the potential for slippage and failure of the keyed connection. Force fit connections also require tight tolerances in order to transmit the required torque from the inner drive to the bushing, which also makes the force fit difficult to disassemble. Inner drive assemblies including keyed connections or force fit connections incur increased manufacturing costs in order to produce the tight tolerances required for the connections. Furthermore, keyed connections and force fit connections require that each bearing and each inner drive be individually matched for each specific pump, which inhibits interchangeability of standardized components. Additionally, the assembly and disassembly concerns associated with keyed connections and force fit connections increase the burden of performing maintenance of the pump. For example, it is sometimes necessary to change out the inner drive if the magnets become demagnetized. There is, therefore, a need for a coupling that facilitates ease of manufacture, repeatability and interchangeability, while also maintaining compatibility with corrosive working matter and the sealless pump design.

### SUMMARY

The present invention provides a magnetically-driven centrifugal pump comprising: a housing comprising an inlet, an outlet and an interior; a stationary shaft disposed within the interior of the housing; a bushing assembly; an inner drive comprising: an inner magnet assembly concentrically disposed about the bushing assembly; and an outer shell covering the inner drive magnet assembly; an outer drive concentrically disposed about the inner drive having an outer magnet assembly for driving the inner drive; and an impeller connected to the inner drive for receiving a working matter from the housing inlet and directing the working matter to the housing outlet; characterised by the bushing assembly comprising: an inner bearing concentrically disposed about the stationary shaft; an outer sleeve covering the inner bearing; and a plurality of anti-rotation grips positioned about an outer surface of the outer sleeve; and wherein the inner bearing is disposed concentrically within the inner magnet assembly such that the plurality of anti-rotation grips along the outer shell deforms the outer shell to prevent relative rotation between the bushing assembly and the inner drive.

### BRIEF DESCRIPTION OF THE DRAWINGS

FIG. 1 shows a magnetically-driven centrifugal pump in accordance with the present invention.
FIG. 2 is a cross-sectional schematic diagram of the centrifugal pump of FIG. 1 showing an inner drive assembly.
FIG. 3 shows a perspective cross-sectional view of the inner drive assembly of the centrifugal pump of FIG. 2.
FIG. 4 shows an exploded view of the inner drive assembly of PIG. 3 in which anti-rotation grips of the present invention are shown.
FIG. 5 shows a close-up view of an anti-rotation grip from FIG. 4.
FIG. 6 shows two shafting members coupled together with an anti-rotation grip of the present invention.

### DETAILED DESCRIPTION

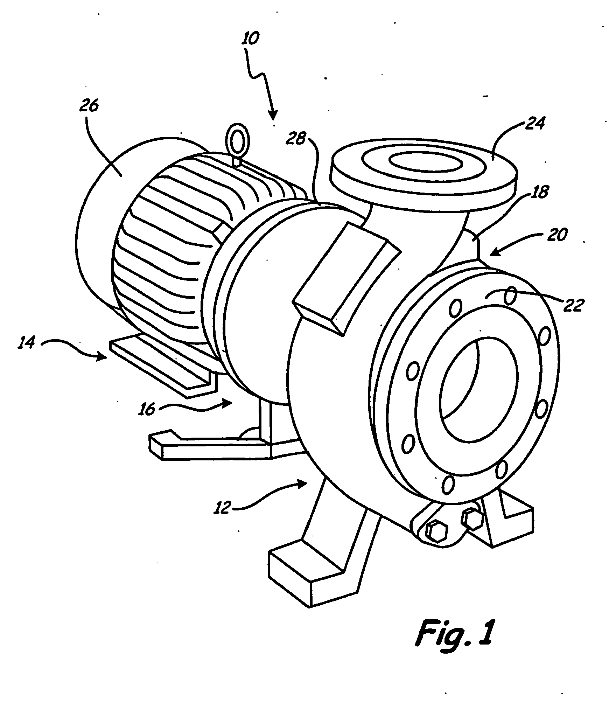

FIG. 1 shows magnetically-driven centrifugal pump 10 in accordance with the present invention. Pump 10 comprises wet portion 12, dry portion 14 and magnetic coupling assembly 16. Wet portion 12 includes wet housing 18, which includes impeller portion 20, inlet 22 and outlet 24. Dry portion 14 includes drive motor 26, which is coupled to an impeller within impeller portion 20 through a magnetic drive coupling located within magnetic coupling assembly 16. Pump 10 is configured to draw in a process fluid, or some other such working matter, into wet housing 18 at inlet 22, whereby the impeller within impeller portion 20 accelerates the process fluid into outlet 24 such that the process fluid can be delivered to another location. For example, pump 10 can be used to deliver a process fluid from a sump located below pump 10 to a storage tank located above pump 10.

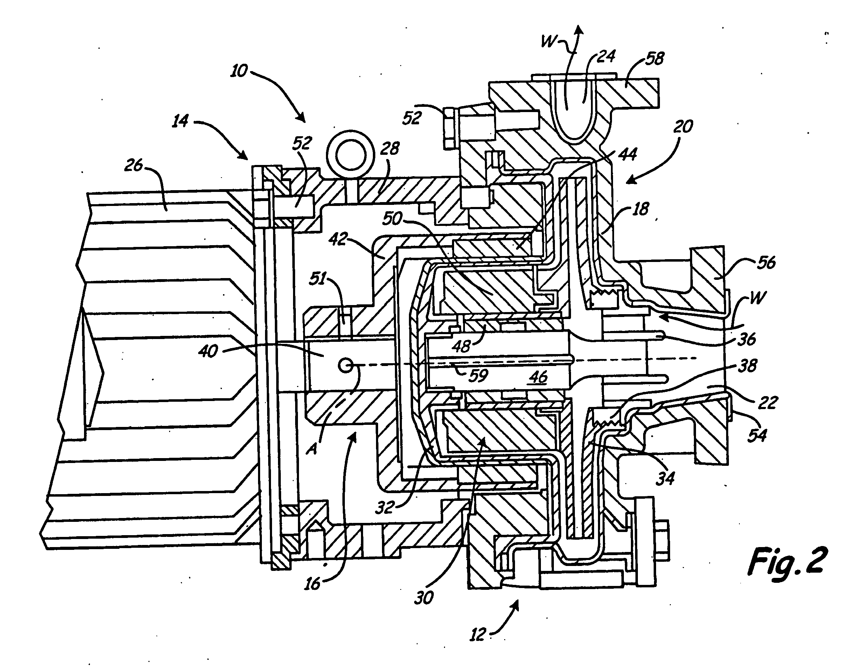

Magnetic coupling assembly 16 includes coupling housing 28, which connects wet housing 18 with drive motor 26. Within magnetic coupling assembly 16, an outer drive connected to a drive shaft of motor 26 is magnetically coupled to an inner drive that rotates about a stationary shaft within wet housing 18. The inner drive is connected to the impeller such that torque from motor 26 is transmitter to the impeller. The outer drive is separated from the inner drive by a barrier within wet housing 18 such that the process fluid flowing through housing 18 is isolated from dry portion 14. As such, pump 10 is also referred to as a sealless pump due to the lack of the need for sealing off the dry portion from the process fluid. Thus, pump 10 is frequently used in conjunction with harmful or hazardous process fluids, such as acids, or food products since the impeller can be placed in direct contact with the process fluid in a safe and sanitary manner. In order to further facilitate the corrosion-resistant and sanitary properties of pump 10, and to reduce interference with the magnetic coupling, wet parts (i.e. parts coming in to contact with the process fluid) are made from corrosion resistant, non-metallic materials. In particular, the inner drive is enclosed within a polymeric material to isolate magnets within the inner drive from the process fluid. The inner drive is mounted to the stationary shaft through a bushing that is sheathed in a polymeric material, as better shown in FIG. 2.

FIG. 2 shows a cross-sectional schematic diagram of wet portion 12 and dry portion 14 of centrifugal pump 10, which are connected by magnetic drive assembly 16. Wet portion 12 includes inlet 22, outlet 24, inner drive assembly 30 and shell 32, which are disposed within wet housing 18. Wet portion 12 also includes impeller 34, thrust ring 36 and thrust bearing 38, which are disposed within impeller portion 20 of wet housing 18. Dry portion 14 includes drive motor 26, coupling housing 28, motor shaft 40, outer drive 42 and outer magnet assembly 44. Inner drive assembly 30 includes shaft 46, bushing 48 and inner drive 50. Pump 10 comprises a means for centrifugally accelerating working matter W about axis A such that working matter W can be delivered from one location to another. Working matter W comprises a fluid or some other such material that is typically used in manufacturing or food processing facilities. Working matter W enters wet housing 18 at inlet 22 where impeller 34 imparts tangential acceleration to working matter W, thus driving working matter W out of housing 18 at outlet 24. Impeller 34 is driven by inner drive assembly 30, which is magnetically coupled to outer drive 42 through shell 32. Outer drive 42 is driven by drive motor 26, which rotates shaft 40 at a speed commensurate with a desired output of pump 10, based on the specific fluid properties of working matter W. Inner drive assembly 30 includes inner drive 50, which is connected to impeller 34 and configured to rotate about shaft 46 on bushing 48. Inner drive 50 is mounted to bushing 48 through the keyless coupling of the present invention.

Drive motor 26, which, in one embodiment, comprises a magneto-electric motor, is connected to an electric power source and converts electrical power input into a mechanical shaft power output at impeller 34. Coupling housing 28 connects drive motor 26 to wet housing 18 of wet portion 12. Coupling housing 28 is connected to drive motor 26 and wet housing 18 with, for example, threaded fasteners 52. Coupling housing 28 comprises a cylindrical shell that not only provides a structural frame for pump 10, but also provides a sealed enclosure in which magnetic coupling assembly 16 is disposed, thus isolating outer drive 42 and the operative side of drive motor 26 from potentially harsh operating environments. In one embodiment, wet housing 18 and coupling housing 28 are comprised of cast iron, stainless steel, alloys or other metals. Outer drive 42 is connected with motor shaft 40 through, for example, a keyed connection at joint 51 (key not shown). Outer drive 42 comprises an annular cylinder into which outer magnets 44 are mounted. Accordingly, outer magnet assembly 44 is rotated about pump centerline A as drive motor 26 drives output shaft 40. Outer drive 42 is also sized to receive inner drive assembly 30. Inner drive 50 of inner drive assembly 30 includes an annular ring of magnets that form a magnetic coupling with outer magnet assembly 44 of outer drive 42. Thus, as drive motor 26 rotates outer magnet assembly 44 about inner drive assembly 30, inner drive 50 rotates impeller 34 about centerline A within wet housing 18.

Wet housing 18 comprises an annular body in which inner drive assembly 50 is disposed to interact with outer drive 42, and impeller 34 is disposed to receive working matter W at inlet 22. Inner drive assembly 50 is disposed about centerline A on shaft 46 within wet housing 18 such that inner drive 30 is able to rotate impeller 34 about shaft 46. Impeller 34 comprises an annular disk that includes a plurality of helical blades that react with incoming working matter W. Impeller 34 includes a large axial opening for receiving working matter W from inlet 22, and an elongate annular opening for dispersing working matter W to outlet 24. As outer drive 42 rotates inner drive 30, impeller 34 sucks working matter W into the axial opening, such as through a pipe connected to flange 56 of wet housing 18. Working matter W continues through impeller 34 and is expelled from pump 10 at outlet 24 into, for example, a pipe connected to flange 58 of wet housing 18.

Shaft 46 is anchored within pump 10 by shell 32 and thrust ring 36. For example, shaft 46 is press fit into bores within shell 32 and thrust ring 36. The outer periphery of shell 32 is clamped between wet housing 18 and coupling housing 28. Thrust ring 36 is disposed within inlet 22 and comprises an annular disk through which working matter W is permitted to enter pump 10. Thrust ring 36 assists in supporting thrust bearing 38 within housing 18. Thrust bearing 38 provides an axial running surface upon which impeller 34 is permitted to rotate. Shell 32, thrust ring 36 and shaft 46 are thus maintained stationary by wet housing 18 during operation of pump 10 such that impeller 34, inner drive 50 and bushing 48 rotate around shaft 46. Shell 32 also comprises a dome-like annular body into which inner drive assembly 30 is situated to provide a barrier between outer drive 42 and inner drive assembly 30. Likewise, the interior of wet housing 18 is lined with lining 54 such that inner drive assembly 30 and impeller 34 are encapsulated in a sealed, sanitary and corrosion-resistant chamber. In one embodiment, shell 32, lining 54 and thrust ring 36 are comprised of a nonconductive plastic resin such as ethylene-tetra-fluoro-ethylene (ETFE) with a carbon fiber filler for strength. Likewise, the other wet parts of pump 10 are themselves comprised of or encapsulated in corrosion-resistant materials. Shaft 46 is comprised of a high-strength, corrosion-resistant, durable material such as ceramic, silicon carbide, tungsten carbide, alumina, bauxite, zirconia, stainless steel, forged aluminum or the like. Impeller 34 is comprised of a fiber reinforced plastic such as a mixture of polyacrylonitrile (PAN) carbon fiber and ETFE. Thus, working matter W is provided with a sealed flow path that can be directly integrated into a pipeline with reduced risk of foreign matter entering the flow of working matter W. Working matter W is also circulated through impeller 34 to lubricate and facilitate rotation of bushing 48 about shaft 46. For example, working matter W is permitted to enter the inner diameter of bushing 48 along axial groove 59 positioned on shaft 46.

Impeller 34 is connected to both bushing 48 and inner drive assembly 50 such that the three components rotate in unison about shaft 46. Bushing 48 comprises a bearing having wear surfaces that facilitate rotation of bushing 48 about shaft 46. Inner drive 50 comprises magnets and other means for transmitting torque to bushing 48 and impeller 34. Inner drive 50 is connected to bushing 48 through the keyless coupling of the present invention.

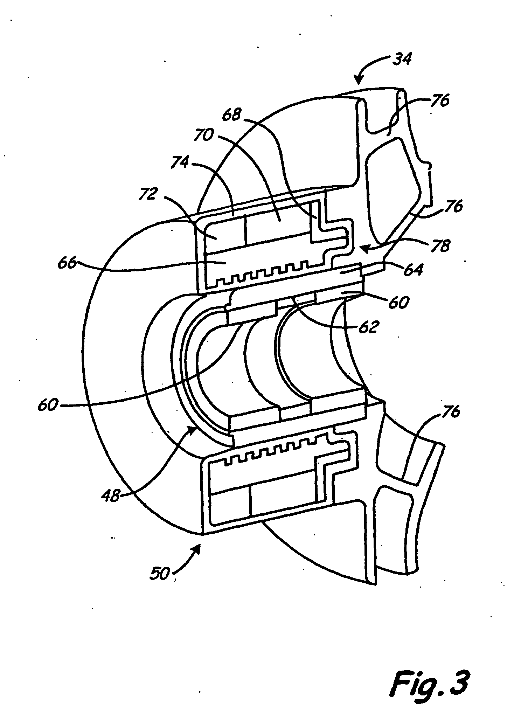

FIG. 3 shows a perspective cross-sectional view of inner drive 50 as mounted to bushing 48 and impeller 34. Bushing 48 includes radial bearings 60, spacer 62 and sleeve 64. Inner drive 50 includes yoke 66, drive ring 68, magnets 70, spacer 72, and outer shell 74. Impeller 34 includes vanes 76. Vanes 76 comprise helical flow diverters that extend through the radial opening within impeller 34. Impeller 34 utilizes vanes 76 to accelerate working matter W through pump 10. Working matter W is also permitted to engage the inner diameter of bushing 48, typically through an axial groove in shaft 46 (FIG. 2).

Bushing 48 comprises two journal or sleeve-type bearings that utilize working matter W as a lubricant. In one embodiment, bushing 48 utilizes a partial hydrodynamic film lubrication, in which a thin film of working matter W is provided between shaft 46 and bearing 60 to lubricate the surfaces of bushing 48. Radial bearings 60 and spacer 62 are typically comprised of inert materials such that they can contact working matter W without reaction. In one embodiment, radial bearings 60 comprise silicon carbide and spacer 62 comprises Teflon. Radial bearings 60 provide wear-resistant surfaces which rotate on stationary shaft 46. However, spacer 62 has a slightly larger inner diameter than radial bearings 60 such that a pocket is formed between radial bearings 60 when bushing 48 is fitted over shaft 46. Working matter W is trapped within this pocket between spacer 62 and shaft 46 such that a thin-film bearing is formed to provide partial support to bushing 48. Spacer 62 provides a low-resistance surface upon which working matter W circulates. Typically, bushing 48 is fitted over shaft 46 such that an approximately 0.003 inch (∼0.00762 cm) clearance is provided between shaft 46 and the inner diameter surfaces of radial bearings 60. The outer diameter of radial bearings 60 and spacer 62 are encased within sleeve 64. Sleeve 64 also comprises an inert material such that it is able to contact working matter W without reacting. However, sleeve 64 must also be comprised of a material suitable for receiving torque transmitted from inner drive 50.

Inner drive 50 transmits torque imparted by outer drive 42 to impeller 34 and bushing 48, and includes yoke 66, drive ring 68, magnets 70, spacer 72 and outer shell 74. Yoke 66 provides a structural reinforcing member for inner drive 50. Yoke 66 typically comprises a magnetic metal such as a cast iron or steel. Along with drive ring 68, yoke 66 also provides a flange that is inserted into a notch in impeller 34 at joint 78. The bottom of yoke 66 is ridged to provide an intermeshed connection with outer shell 74. Yoke 66 provides a platform on which to mount magnets 70 and spacer 72. Magnets 70 comprise an annular array of magnets sized to fit within outer drive 42 (FIG. 2) such that they are able to magnetically interact with outer magnet assembly 44 of outer drive 42. Magnets 70 and outer magnet assembly 44 comprise any suitable magnetic material, such as electromagnets, rare-earth magnets, ferrous metals, or the like. In other embodiments, magnets 70 comprise a torque ring, which comprises a metal for interacting with outer magnet assembly 44 of outer drive 42. Inner drive 50 is encased in outer shell 74 to isolate yoke 66, torque ring 68 and magnets 70 from working matter W. Outer shell 74 comprises an annular member having an inner diameter for receiving bushing 48, which is configured for rotating about shaft 46. Thus, outer shell 74 of drive 50 is rigidly coupled to sleeve 64 of bushing 48. Specifically, inner drive 50 is press fit over bushing 48, which includes a plurality of gripping members that dig into inner drive 50 to prevent relative rotation between bushing 48 and inner drive assembly 50.

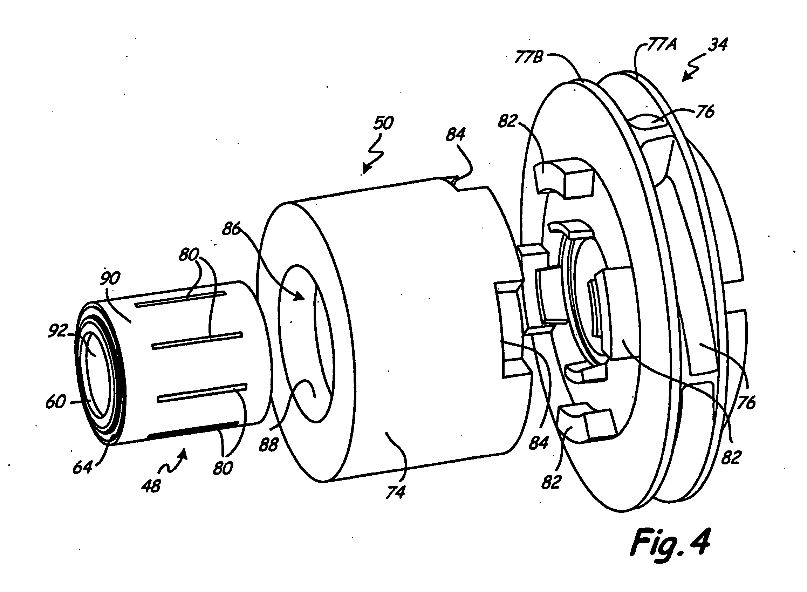

FIG. 4 shows an exploded view of bushing 48, inner drive 50 and impeller 34 of pump 10 in which anti-rotation grips 80 of the keyless coupling of the present invention are shown. Impeller 34 includes vanes 76 for accelerating working matter W through pump 10 between front shroud 77A and back shroud 77B. Impeller 34 also includes a plurality of lugs 82 for connecting with a plurality of notches 84 on inner drive 50. Lugs 82 and notches 84 are forced-fit together to form joint 78 as seen in FIG. 3. Inner drive 50 also includes central bore 86, which includes inner surface 88. Inner drive 50 is encased in outer shell 74 such that inner drive 50 forms a generally smooth, sealed body having a generally annular shape. Similarly, the outer diameter of bushing 48 is sheathed in outer sleeve 64 such that bushing 48 forms a generally smooth body having a generally cylindrical shape with outer surface 90. Bushing 48 also includes inner bore 92, which is sized to receive shaft 46.

Outer surface 90 includes anti-rotation grips 80, which comprise protrusions extending radially from surface 90. Upon full insertion of bushing 48 into inner bore 86 of inner drive 50, outer surface 90 adjoins inner surface 88 such that anti-rotation grips 80 are disposed between outer surface 90 and inner surface 88. The outer diameter of outer sleeve 64 is sized such that a clearance fit is produced between sleeve 64 and inner surface 88. In other embodiments, the outer diameter of outer sleeve 64 is slightly larger than the diameter of inner bore 86 such that a loose force-fit is produced upon insertion of bushing 48 into bore 86. The height of anti-rotation grips 80 are sized such that a tighter force-fit connection is formed when bushing 48 is pushed far enough into bore 86 such that anti-rotation grips 80 engage inner surface 88. Anti-rotation grips 80 do not extend to the end surfaces of sleeve 64 so that bushing 46 is more easily inserted into inner bore 86 at either end of bushing 48 before anti-rotation grips 80 begin. For example, in one embodiment, anti-rotation grips extend across approximately sixty percent of sleeve 64. Additionally, outer surface 90 and inner surface 88 are circular in shape such that bushing 48 fits into inner bore 86 in any radial orientation. This facilitates easy assembly by eliminating the need to radially align bushing 48 with inner drive 50. Furthermore, bushing 48 can be repeatedly removed from bore 88 such that maintenance or repair of inner drive assembly 30 is easily performed.

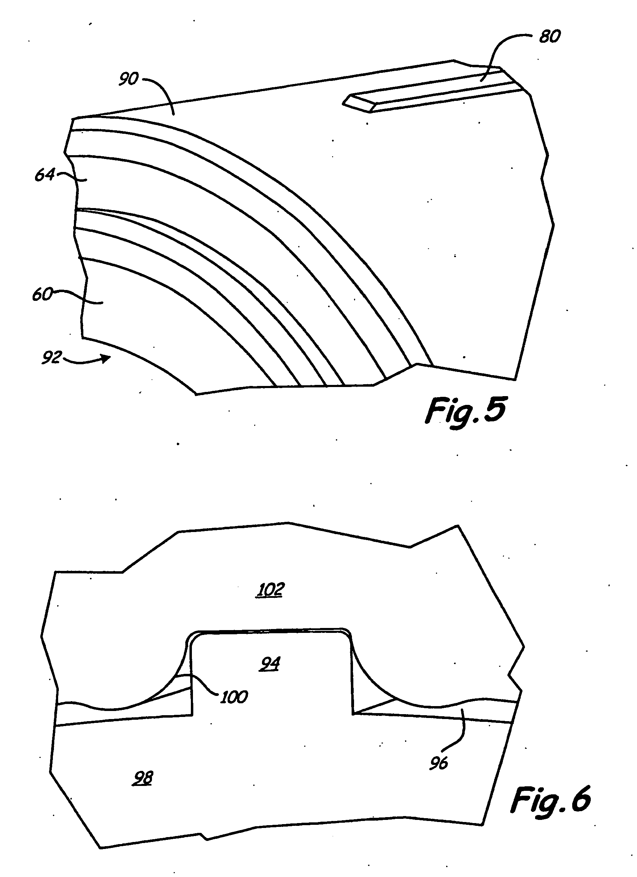

FIG. 5 shows a close-up view of one anti-rotation grip 80 of FIG. 4. The specific shape, number and geometry of anti-rotation grip 80 is configured to the specific design parameters of the pump in which it is used. For example, the design of anti-rotation grip 80 is selected to transmit the required torque from inner drive 50 to bushing 48, depending on the material properties of sleeve 64 and outer shell 74, such as coefficient of friction. The design of anti-rotation grip 80 can also be selected to achieve a desired force necessary for inserting bushing 48 into inner drive 50. In the embodiment shown, anti-rotation grip 80 comprises an elongate strip disposed axially along the length of bushing 48. For the particular geometry of this elongate strip, eight anti-rotation grips are spaced evenly around outer surface area of sleeve 64. Thus, sleeve 64 has a symmetric cross-section such that bushing 48 self-aligns, or centers itself, within bore 88. For the embodiment of FIGS. 3 and 4, the elongate strip has a height of approximately 0.015 inches (∼0.0381 cm) and a width of approximately 0.075 inches (∼0.1905 cm). As mentioned above, anti-rotation grip 80 does not extend to the end surfaces of sleeve 64. In the embodiment shown, anti-rotation grip 80 stops short of the edge of sleeve 64 by approximately 1/2 inch (∼1.27 cm). Sleeve 64 and outer shell 74 are comprised of ETFE having a 20% carbon fill. However, in other embodiments, outer shell 74 and sleeve 64 are comprised of other high-strength, corrosion-resistant polymeric materials such as polytetrafluoroethylene (PTFE). Carbon fills or other such similar additives are included within sleeve 64 and shell 74 to enhance strength to prevent shearing of anti-rotation grip 80 during loading. Use of anti-rotation grips 80 eliminates the need for machining precision keyways into both sleeve 64 and shell 74, as anti-rotation grips 80 can either be molded or machined into sleeve 64, while shell 74 is left smooth. However, in other embodiments anti-rotation grips 80 can be produced in shell 74, while sleeve 64 is left smooth. In either embodiment, anti-rotation grips 80 deform a mating smooth surface to produce a non-slip engagement.

FIG. 6 shows an embodiment of the present invention is which anti-rotation grips 94 extend from surface 96 of first body 98 to engage surface 100 of second body 102. First body 98 and second body 102 comprise any typical shafting components that may be found in a coupling of concentric parts. In one embodiment, first body 98 comprises a shaft and second body 102 comprises a shaft socket. In another embodiment, first body 98 comprises shell 74 and second body 102 comprises sleeve 64. First body 98 and second body 102 are fit together such that one body is concentrically disposed within the other. As such, surface 96 is adjacent surface 100. In one embodiment, first body 98 and second body 102 are force-fit together such that no clearance is provided between the two bodies. In other embodiments, such as shown in FIG. 6, a clearance fit is provided such that a gap is left between surface 96 and surface 100 (the gap shown in FIG. 6 is exaggerated for illustrative purposes). In any event, the fitting of first body 96 with second body 102 induces anti-rotation grips 94 to deform surface 100. Specifically, anti-rotation grips 94 impart corrugations or grooves into the otherwise smooth surface 100. The grooves engage anti-rotation grips 94 to inhibit relative rotation between first body 98 and second body 102. Likewise, the force-fit connection induces surface 98 to compress anti-rotation grips 94, causing a rounding of the edges of grips 94. Additionally, grips 94 become slightly compressed, further locking sleeve 64 with shell 74. These deformations are primarily elastic such that upon removal of the force-fit connection, surface 100 and grips 94 substantially return to their pre-deformed state. There is some residual plastic deformation retained by first body 98 and second body 102. The plastic deformations, however, are limited in that they do not prevent reassembly of first body 98 and second body 102. For example, the edges of grips 94 may remain rounded and some slight curvature may remain in surface 100. The height of grip 94 is, however, substantially greater than the plastic curvatures remaining in surface 100 such that a new force fit connection is established upon re-coupling of first body 98 and second body 102.

In various embodiments, the geometry and number of anti-rotation grips 94 is configured to permit slippage between first body 98 and second body 102 in the event of an over speed situation. For example, in the case of pump 10 (FIG. 2), drive motor 26 may become over-powered such that it runs at speeds beyond which pump 10 was designed to operate, which may lead to undesirable contact of impeller 34 with lining 54 or shell 32. As such, anti-rotation grips 94 can be designed to transmit a maximum amount a torque, with slippage occurring beyond that threshold level. When designing anti-rotation grips 80, however, particular attention must be paid to temperature limitations of the materials of sleeve 64 and shell 74 to avoid potential fusing and lockup of sleeve 64 and shell 74. Thus, a balance must be achieved between transmitting the desired amount of torque with a force-fit of adequate tension, and the ability of the force-fit to allow slippage.

Anti-rotation grips 94 thus provide a convenient, low cost and effective means for joining and limiting relative rotation of concentric shafting members. Anti-rotation grips 94 are easily manufactured into a mating surface of a shafting member without the need for machining a key slot with tight tolerances, which increases manufacturing costs. As such, greater interchangeability of bushing 46 and inner drive 50 is achieved. Anti-rotation grips 94 also facilitate easy initial insertion of one shafting member into another without the need for aligning or clocking the two members. Anti-rotation grips 94 provide a tight, rigid connection capable of transferring torque loads commonly associated with centrifugal pumps and other shafting applications. Anti-rotation grips 94 also permit rapid and easy disassembly of shafting components in a manner that permits reassembly.

Although the present invention has been described with reference to preferred embodiments, workers skilled in the art will recognize that changes may be made in form and detail without departing from the scope of the invention, which is defined by the claims and their equivalents.

## Claims

1. A magnetically-driven centrifugal pump (10) comprising:
a housing (18) comprising an inlet (22), an outlet (24) and an interior;
a stationary shaft (46) disposed within the interior of the housing;
a bushing assembly (48) comprising an inner bearing (60) concentrically disposed about the stationary shaft and an outer sleeve (64) covering the inner bearing
an inner drive (50) comprising:
an inner magnet assembly (70) concentrically disposed about the bushing assembly; and
an outer shell (74) covering the inner drive magnet assembly;
an outer drive (42) concentrically disposed about the inner drive having an outer magnet assembly (44) for driving the inner drive; and
an impeller (34) connected to the inner drive for receiving a working matter from the housing inlet and directing the working matter to the housing outlet;
**characterised by** the bushing assembly (48) comprising:
a plurality of anti-rotation grips (80) positioned about an outer surface (90) of the outer sleeve; and
wherein the inner bearing (60) is disposed concentrically within the inner magnet assembly (70) such that the plurality of anti-rotation grips (80) along the outer shell (74) deforms the outer shell to prevent relative rotation between the bushing assembly (48) and the inner drive (50).

2. The magnetically-driven centrifugal pump (10) of claim 1 wherein the inner drive (50) comprises an inner surface (88), wherein the inner surface (88) and the outer surface (90) are circular such that the bushing assembly (48) can be inserted into the inner drive having any relative radial rotational position.

3. The magnetically-driven centrifugal pump (10) of claim 1, wherein the plurality of anti-rotation grips (80) form anti-rotation grooves in an inner surface (88) of the inner drive (50) to prevent relative rotation between the bushing assembly (48) and the inner drive (50).

4. The magnetically-driven centrifugal pump (10) of claim 3 wherein the outer sleeve (64) of the bushing assembly (48) is force fit into the inner surface (88) of the inner drive (50).

5. The magnetically-driven centrifugal pump (10) of claim 4 wherein the plurality of anti-rotation grips (80) are compressed between the outer shell (74) and the outer sleeve (64) within the force-fit.

6. The magnetically-driven centrifugal pump (10) of claim 4 or 5 wherein the inner surface (88) of the inner drive (50) and the outer surface (90) of the outer sleeve (64) arc coated in deformable, corrosion-resistant polymeric material.

7. The magnetically-driven centrifugal pump (10) of claim 6 wherein the polymeric material coatings are plastically and elastically deformed within the fome-fit.

8. The magnetically-driven centrifugal pump (10) of any preceding claim wherein the plurality of anti-rotation grips (80) comprises elongate ribs oriented axially along the outer sleeve (64).

9. The magnetically-driven centrifugal pump (10) of claim 8 wherein the elongate ribs extend across less than an entire length of an engagement between the outer surface (90) and the inner surface (88) of the inner drive (50).

## Patentansprüche

1. Magnetisch betriebene Zentrifugalpumpe (10), aufweisend:
ein Gehäuse (18) mit einem Einlass (22), einem Auslass (24) und einem Inneren,
eine stationäre Achse (46), die in dem Inneren des Gehäuses angeordnet ist;
eine Buchsenanordnung (48) mit einem inneren Lager (60), das konzentrisch um die stationäre Achse herum angeordnet ist, und mit einer äußeren Hülse (64), die das innere Lager überdeckt;
einen inneren Antrieb (50) mit:
einer inneren Magnetanordnung (70), die konzentrisch um die Buchsenanordnung herum angeordnet ist; und
einem äußeren Mantel (74), der die Magnetanordnung des inneren Antriebs überdeckt;
einen äußeren Antrieb (42), der konzentrisch um den inneren Antrieb angeordnet ist und eine äußere Magnetanordnung (44) zum Antreiben des inneren Antriebs aufweist; und
ein Laufrad (34), das mit dem inneren Antrieb verbunden ist, um ein Arbeitsmaterial von dem Gehäuse-Einlass zu empfangen und das Arbeitsmaterial zu dem Gehäuse-Auslass zu leiten,
**dadurch gekennzeichnet, dass** die Buchsenanordnung (48) Folgendes aufweist:
eine Mehrzahl von Antirotations-Greifeinrichtungen (80), die um eine Außenfläche (90) der äußeren Hülse herum angeordnet sind; und
wobei das innere Lager (60) in der inneren Magnetanordnung (70) konzentrisch derart angeordnet ist, dass die Mehrzahl von Antirotations-Greifeinrichtungen (80) entlang des äußeren Mantels (74) den äußeren Mantel verformt, um eine relative Rotation zwischen der Buchsenanordnung (48) und dem inneren Antrieb (50) zu verhindern.

2. Magnetisch betriebene Zentrifugalpumpe (10) nach Anspruch 1,
wobei der innere Antrieb (50) eine Innenfläche (88) aufweist, wobei die Innenfläche (88) und die Außenfläche (90) kreisförmig sind, so dass die Buchsenanordnung (48) in den inneren Antrieb eingesetzt werden kann, während sich dieser in einer beliebigen relativen radialen Rotationsstellung befindet.

3. Magnetisch betriebene Zentrifugalpumpe (10) nach Anspruch 1,
wobei die Mehrzahl von Antirotations-Greifeinrichtungen (80) Antirotations-Nuten in einer Innenfläche (88) des inneren Antriebs (50) bildet, um eine relative Rotation zwischen der Buchsenanordnung (48) und dem inneren Antrieb (50) zu verhindern.

4. Magnetisch betriebene Zentrifugalpumpe (10) nach Anspruch 3,
wobei die äußere Hülse (64) der Buchsenanordnung (48) im Festsitz in die Innenfläche (88) des inneren Antriebs (50) eingepasst ist.

5. Magnetisch betriebene Zentrifugalpumpe (10) nach Anspruch 4,
wobei die Mehrzahl von Antirotations-Greifeinrichtungen (80) zwischen dem äußeren Mantel (74) und der äußeren Hülse (64) innerhalb des Festsitzes zusammengedrückt wird.

6. Magnetisch betriebene Zentrifugalpumpe (10) nach Anspruch 4 oder 5,
wobei die Innenfläche (88) des inneren Antriebs (50) und die Außenfläche (90) der äußeren Hülse (64) mit verformbarem, korrosionsbeständigen Polymermaterial beschichtet sind.

7. Magnetisch betriebene Zentrifugalpumpe (10) nach Anspruch 6,
wobei die Beschichtungen aus Polymermaterial innerhalb des Festsitzes plastisch und elastisch verformt werden.

8. Magnetisch betriebene Zentrifugalpumpe (10) nach einem der vorausgehenden Ansprüche,
wobei die Mehrzahl von Antirotations-Greifeinrichtungen (80) längliche Rippen mit einer Orientierung axial entlang der äußeren Hälse (64) aufweist.

9. Magnetisch betriebene Zentrifugalpumpe (10) nach Anspruch 8,
wobei die länglichen Rippen sich über weniger als die gesamte Länge eines Zusammenwirkens zwischen der Außenfläche (90) und der Innenfläche (88) des inneren Antriebs (50) erstrecken.

## Revendications

1. Pompe centrifuge à entraînement magnétique (10), comprenant :
un logement (18) comprenant une admission (22), un refoulement (24) et un intérieur ;
un arbre stationnaire (46) disposé à l'intérieur du logement ;
un ensemble de douille (48) comprenant un palier interne (60) disposé de manière concentrique autour de l'arbre stationnaire et un manchon externe (64) couvrant le palier interne ;
un entraînement interne (50) comprenant :
un ensemble d'aimant interne (70) disposé de façon concentrique autour de la douille ; et
une coque externe (74) couvrant l'ensemble d'aimant d'entraînement interne ;
un entraînement externe (42) disposé de façon concentrique autour de l'entraînement interne ayant un ensemble d'aimant externe (44) pour entraîner l'entraînement interne ; et
une hélice (34) raccordée à l'entraînement interne pour recevoir une matière de travail depuis l'admission de logement et diriger la matière de travail vers le refoulement de logement ;
**caractérisé en ce que** l'ensemble de douille (48) comprend :
une pluralité de griffes anti-rotation (80) positionnées autour d'une surface externe (90) du manchon externe ; et
dans laquelle le palier interne (60) est disposé de façon concentrique dans l'ensemble d'aimant interne (70) de sorte que la pluralité de griffes anti-rotation (80) le long de la coque externe (64) déforme la coque externe pour empêcher une rotation relative entre l'ensemble de douille (48) et l'entraînement interne (50).

2. Pompe centrifuge à entraînement magnétique (10) selon la revendication 1, dans laquelle l'entraînement interne (50) comprend une surface interne (88), la surface interne (88) et la surface externe (90) étant circulaires de sorte que l'ensemble de douille (48) peut être inséré dans l'entraînement interne ayant une position rotationnelle radiale relative.

3. Pompe centrifuge à entraînement magnétique (10) selon la revendication 1, dans laquelle la pluralité de griffes anti-rotation (80) forment des gorges anti-rotation dans une surface interne (88) de l'entraînement interne (50) pour empêcher une rotation relative entre l'ensemble de douille (48) et l'entraînement interne (50).

4. Pompe centrifuge à entraînement magnétique (10) selon la revendication 3, dans laquelle le manchon externe (64) de l'ensemble de douille (48) est ajusté par la force dans la surface interne (88) de l'entraînement interne (50).

5. Pompe centrifuge à entraînement magnétique (10) selon la revendication 4 dans laquelle la pluralité de griffes anti-rotation (80) est comprimée entre la coque externe (74) et le manchon externe (64) dans l'ajustement par la force.

6. Pompe centrifuge à entraînement magnétique (10) selon la revendication 4 ou 5, dans laquelle la surface interne (88) de l'entraînement interne (50) et la surface externe (90) du manchon externe (64) sont revêtues d'un matériau polymère résistant à la corrosion et déformable.

7. Pompe centrifuge à entraînement magnétique (10) selon la revendication 6, dans laquelle les revêtements en matériau polymère sont déformés plastiquement et élastiquement dans l'ajustement par la force.

8. Pompe centrifuge à entraînement magnétique (10) selon l'une quelconque des revendications précédentes, dans laquelle la pluralité de griffes anti-rotation (80) comprend des nervures allongées orientées axialement le long du manchon externe (64).

9. Pompe centrifuge à entraînement magnétique (10) selon la revendication 8, dans laquelle les nervures allongées s'étendent sur moins de la longueur entière d'un engagement entre la surface externe (90) et la surface interne (88) de l'entraînement interne (50).
